(19) Europäisches Patentamt
European Patent Office
Office européen des brevets

(11) EP 3 558 896 B1

(12) EUROPEAN PATENT SPECIFICATION

(45) Date of publication and mention of the grant of the patent:
**17.08.2022 Bulletin 2022/33**

(21) Application number: **17884070.8**

(22) Date of filing: **07.12.2017**

(51) International Patent Classification (IPC):
***C05C 9/00*** (2006.01) ***C05G 3/00*** (2020.01)
***C05C 3/00*** (2006.01) ***C05C 11/00*** (2006.01)
***A01N 25/22*** (2006.01) ***C05B 7/00*** (2006.01)
***C05G 3/90*** (2020.01)

(52) Cooperative Patent Classification (CPC):
(C-Sets available)
**C05B 7/00; A01N 25/22; C05C 3/005; C05C 9/005; C05G 3/90** (Cont.)

(86) International application number:
**PCT/IB2017/057717**

(87) International publication number:
**WO 2018/116046 (28.06.2018 Gazette 2018/26)**

(54) **USE OF ARYL SUBSTITUTED PHOSPHORIC ACID TRIAMIDE UREASE INHIBITORS WITH PHOSPHORUS-CONTAINING UREA FERTILIZERS**

VERWENDUNG DER ARYLSUBSTITUIERTEN PHOSPHORSÄURE-TRIAMIDUREASE-INHIBITOREN MIT PHOSPHORHALTIGEN HARNSTOFFDÜNGERN

UTILISATION D'INHIBITEURS D'URÉASE DE TYPE TRIAMIDE D'ACIDE PHOSPHORIQUE SUBSTITUÉ PAR ARYLE AVEC DES ENGRAIS À BASE D'URÉE CONTENANT DU PHOSPHORE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.12.2016 EP 16206105**

(43) Date of publication of application:
**30.10.2019 Bulletin 2019/44**

(73) Proprietor: **BASF SE**
**67056 Ludwigshafen am Rhein (DE)**

(72) Inventors:
- **STAAL, Maarten**
  **67117 Limburgerhof (DE)**
- **SCHMID, Markus**
  **67117 Limburgerhof (DE)**
- **ZERULLA, Wolfram**
  **67117 Limburgerhof (DE)**

(74) Representative: **BASF IP Association**
**BASF SE**
**G-FLP-C006**
**67056 Ludwigshafen (DE)**

(56) References cited:
**EP-A1- 0 119 494**
**WO-A1-2006/010389**
**WO-A1-2013/071344**
**WO-A1-2013/071344**
**WO-A1-2015/001391**
**WO-A1-2015/116842**
**WO-A2-2009/079994**
**WO-A2-2015/081349**
**DE-A1-102009 034 433**
**US-A- 4 517 004**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C05B 7/00, C05G 3/90;**
**C05C 3/005, C05G 3/90;**
**C05C 9/005, C05G 3/90**

**Description**

Use of aryl substituted phosphoric acid triamide urease inhibitors with phosphorus-containing urea fertilizers

Description

The present invention relates to the use of a mixture of aryl substituted phosphoric acid triamide urease inhibitors with a phosphorus-containing urea fertilizer, namely to the mixture of N-(2-nitrophenyl)phosphoric triamide (referred to as "2-NPT" in the following) with phosphorus-containing urea fertilizers such as urea fertilizers containing DAP (diammonium phosphate) or MAP (monoammonium phosphate).

Worldwide, the predominant and further-increasing amount of the nitrogen used for fertilizing is employed in the form of urea or urea-containing fertilizers. Urea itself, however, is a form of nitrogen which is absorbed very little if at all, being hydrolyzed relatively rapidly by the enzyme urease, which is present ubiquitously in the soil, to form ammonia and carbon dioxide. In this process, in certain circumstances, gaseous ammonia is emitted to the atmosphere, and is then no longer available in the soil for the plants, thereby lowering the efficiency of fertilization.

It is known that the degree of utilization of the nitrogen when using urea-containing fertilizers can be improved by spreading urea-containing fertilizers together with substances which are able to inhibit or decrease the enzymatic cleavage of urea (for a general review, see Kiss, S. Simihaian, M. (2002) Improving Efficiency of Urea Fertilizers by Inhibition of Soil Urease Activity, ISBN 1-4020-0493-1, Kluwer Academic Publishers, Dordrecht, The Netherlands).

N-(2-nitrophenyl)phosphoric triamide (2-NPT) and its synthesis are described in WO 2006/010389. A 4-nitrophenyl derivative of a phosphoric triamide is described for example in U.S. Pat. No. 4,242,325.

It is advisable to apply the urease inhibitors together with the urea onto or into the soil, since this ensures that the inhibitor comes into contact, together with the fertilizer, with the soil. The urease inhibitor may be incorporated in the urea by, for example, dissolving it into the melt prior to urea granulation or prilling. A process of this kind is described in U.S. Pat. No. 5,352,265, for example. A further option is to apply the urease inhibitor to the urea granules or prills, in the form of a solution, for example. Corresponding processes for application, and suitable solvents, are described in US 2010/218575 A1, for example.

It is known in the art that the storage life of the urease inhibitor is limited in the presence of urea-containing fertilizers. The higher the temperature, the shorter is the storage life. If, for example, urea is stored under tropical conditions, a major part of the urease inhibitor has undergone decomposition, generally, after about four weeks of storage.

In order to address this problem, WO 2015/062667 discloses a composition comprising a (thio)phosphoric acid triamide urease inhibitor in combination with a functionalized amine to increase the stability and storage life of the (thio)phosphoric acid triamides urease inhibitors in the presence of urea-containing fertilizers. WO 2016/103168 discloses further amine compounds as additives or coating materials for urea-containing fertilizers. Further urea fertilizer compositions comprising urease-inhibitor compounds are disclosed in EP 0 119 494 A1, WO 2013/071344 A1, DE 10 2009 034433 A1 and WO 2015/081349 A2.

However, it has been generally observed that further stability problems of the (thio)phosphoric acid triamide urease inhibitors arise, if the urease inhibitors are not only used together with urea-containing fertilizers, but also with an additional P-containing fertilizer which is preferably a NPK fertilizer, a NP fertilizer, a PK fertilizer, or a P fertilizer. The present invention focuses on this additional destabilizing effect of the additional P-containing fertilizer.

For example, it has been observed that if urea granules, which have been treated with a formulation comprising the urease inhibitors N-n-butylthiophosphoric acid triamide (NBPT) and N-n-propylthiophosphoric acid triamide (NPPT), are mixed with granules comprising triple super phosphate (TSP) a decomposition of 50 to 90 wt.-% of the urease inhibitors is observed after only one day depending on the amount of TSP in the mixture, while no decomposition is observed after one day in the absence of TSP granules.

It was therefore an object of the present invention to provide a fertilizer mixture containing 2-NPT urease inhibitor, in which the decomposition of said urease inhibitor is prevented, if the urease inhibitors are not only applied together with urea-containing fertilizers, but also with with an additional P-containing fertilizer which is preferably a NPK fertilizer, a NP fertilizer, a PK fertilizer, or a P fertilizer. In this connection, it was another object to improve the storage life of compositions comprising the phosphoric acid triamide, a fertilizer mixture comprising a urea-containing fertilizer and with an additional P-containing fertilizer which is preferably a NPK fertilizer, a NP fertilizer, a PK fertilizer, or a P fertilizer.

In particular, it was an object of the present invention to prevent decomposition of said phosphoric acid triamide, which is caused by the additional P-containing fertilizer which is preferably a NPK fertilizer, a NP fertilizer, a PK fertilizer, or a P fertilizer, but not by the urea-containing fertilizer. In this regard, it was desired to reduce the decomposition caused by the additional P-containing fertilizer as such that less than 10 wt.-% based on the total amount of said phosphoric acid triamide decompose due to the influence of the additional P-containing fertilizer within 15 days at a temperature of 20 °C to 25 °C.

In connection with the above objects, it was further desired to provide a fertilizer mixture containing 2-NPT urease inhibitor, which is toxicologically unobjectionable, which does not adversely affect the urease inhibiting effect and/or the activity of the phosphoric acid, which can be easily and safely packaged, transported and shipped, even in large quantities, and which can be easily and safely handled and applied for soil treatment, even in large quantities.

In view of the above objects, the present invention relates to the use of a mixture comprising

a) 2-NPT and
b) a fertilizer mixture (3) comprising a urea-containing fertilizer (3a) and an additional P-containing fertilizer (3b) which is preferably a NPK fertilizer, a NP fertilizer, a PK fertilizer, or a P fertilizer.

It has surprisingly been found by the inventors of the present invention that in a mixture according to the invention, the decomposition of 2-NPT was prevented or delayed in comparison to other (thio)phosphoric acid triamides (referred to as "other NXPT" in the following), for example in comparison to the N-n-butylthiophosphoric triamide (NBPT) or to N-n-propylthio-phosphoric triamide (NPPT).

In particular, it has been found that, while the P-containing fertilizer (3b) typically causes a decomposition of the other NXPT of at least 10 wt.-% based on the total amount of the (thio)phosphoric acid triamide within 15 days at a temperature of from 20 °C to 25 °C, the situation would be completely different if 2-NPT would be present. In particular, it has been found that the decomposition, which is caused by the P-containing fertilizer (3b), can be reduced as such that less than 60 wt.%, more preferably less than 50 wt.-%, most preferably less than 40 wt.-%, particularly preferably less than 30 wt.-%, particularly more preferably less than 20 wt.-%, particularly less than 10 wt.-% based on the total amount of the phosphoric acid triamide (2) decompose due to the influence of the P-containing fertilizer (3b) within 15 days at a temperature of 20 °C to 25 °C, if 2-NPT is used. Preferably, the decomposition, which is caused by the P-containing fertilizer (3b), can be reduced as such that less than 60 wt.%, more preferably less than 50 wt.-%, most preferably less than 40 wt.-%, particularly preferably less than 30 wt.-%, particularly more preferably less than 20 wt.-%, particularly less than 10 wt.-% based on the total amount of the phosphoric acid triamide (2) decompose due to the influence of the P-containing fertilizer (3b) within 1 month at a temperature of 20 °C to 25 °C, if 2-NPT is used.

The above described improved storage stability of compositions comprising 2-NPT and a fertilizer mixture (3) as defined above is highly advantageous from the commercial perspective, as the phosphoric acid triamide (2) may be applied to the fertilizer mixture (3) at an early stage, and the resulting composition can be stored until the time of its spreading to the soil. Accordingly, it is not required to store the phosphoric acid triamide (2) and a fertilizer mixture (3) separately and to apply the phosphoric acid triamide (2) to the fertilizer mixture (3) only shortly before the application to the soil, which would complicate the handling for the user. Furthermore, the application rates of the compositions comprising the phosphoric acid triamide (2) and the fertilizer mixture (3) can be reduced, as the stability of the phosphoric acid triamide (2) is improved during storage, so that more phosphoric acid triamide (2) is available at the time of applying the composition to the soil resulting in a long urease inhibition.

Furthermore, the present invention discloses a granule G comprising a urea-containing fertilizer (3a) and a P-containing fertilizer (3b) which is preferably a NPK fertilizer, a NP fertilizer, a PK fertilizer, or a P fertilizer, wherein the granule is treated with a (thio)phosphoric acid triamide (2).

The granule G is advantageous because the fertilizer (3a) and (3b) can be provided in combination with the phosphoric acid triamide (2) as urease inhibitor without losing the urease inhibiting effect after the short period of time.

Moreover, the present invention discloses a mixture B comprising

a) 2-NPT and
b) a fertilizer mixture (3) comprising a urea-containing fertilizer (3a) and an additional P-containing fertilizer (3b) which is preferably a NPK fertilizer, a NP fertilizer, a PK fertilizer, or a P fertilizer,

wherein the mixture B is obtainable
by a process P1 comprising the steps of
(a1) treating the granules comprising the urea-containing fertilizer (3a) with the phosphoric acid triamide (2);
(b1) blending the granules of step (a1) with granules comprising the P-containing fertilizer (3b) via dry blending;
or by a process P2 comprising the steps of
(a2) treating the granules comprising the urea-containing fertilizer (3a) with the phosphoric acid triamide (2);
(b2) blending the granules of step (a2) with granules comprising the P-containing fertilizer (3b) via wet blending (such as melting the granules and subsequently solidifying them); or by a process P3 comprising the steps of
(a3) treating the granules comprising the P-containing fertilizer (3b) with the phosphoric acid triamide (2);
(b3) blending the granules of step (a3) with granules comprising the urea-containing fertilizer (3a) via dry blending;
or by a process P4 comprising the steps of
(a4) treating the granules comprising the P-containing fertilizer (3b) with the phosphoric acid triamide (2);

(b4) blending the granules of step (a4) with granules comprising the urea-containing fertilizer (3a) via wet blending (such as melting the granules and subsequently solidifying them); or by a process P5 comprising the steps of
(a5) providing granules comprising the fertilizer mixture (3);
(b5) treating the granules of step (a5) with the phosphoric acid triamide (2);
or by a process P6 comprising the steps of
(a6) blending the granules comprising the urea-containing fertilizer (3a) and P-containing fertilizer (3b) via dry blending;
(b6) treating the granules of step (a6) with the phosphoric acid triamide (2);
or by a process P7 comprising the steps of
(a7) blending the granules comprising the urea-containing fertilizer (3a) and P-containing fertilizer (3b) via wet blending (such as melting the granules and subsequently solidifying them);
(b7) treating the granules of step (a7) with the phosphoric acid triamide (2).

The above defined mixture B comprises the phosphoric acid triamide (2) and the fertilizer mixture (3), and accordingly, the mixture B exhibits the advantageous properties in terms of the stability as outlined in detail above.
Furthermore, the mixture B is specified in terms of processes for combining the different components of the mixture B. The processes result in advantageous structural features of the mixture B.
As used in this specification and in the appended claims, the singular forms of "a" and "an" also include the respective plurals unless the context clearly dictates otherwise.
The term "fertilizer mixture (3)" also refers to granules, capsules, compartments or other units in which both the urea-containing fertilizer (3a) and the P-containing fertilizer (3b) are contained in one granule, capsule, compartment or unit.
The term "at least one" as used herein means one or more, preferably one or two, and thus typically refers to individual compounds or mixtures/combinations.
The abbreviation wt.-% or wt.-% stands for "percent by weight".
As used herein, the term "(thio)phosphoric acid triamide" in each case covers thiophosphoric acid triamides and phosphoric acid triamides. Thus, the prefix "(thio)" as used herein in each case indicates that a group P=S or a group P=O is covered. However, if the prefix "thio" is used without brackets, this indicates that a group P=S is present.
It is noted that the terms "(thio)phosphoric acid triamide" and "(thio)phosphoric triamide" may interchangeably be used and have the same meaning.
As used herein, "(thio)phosphoric acid triamides" may be represented by the following general formula (I)

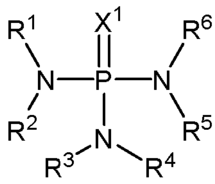

(I)

wherein

| | |
|---|---|
| $X^1$ | is O or S; |
| $R^1$ | is $C_6$-$C_{20}$-aryl, optionally substituted with electro-withdrawing groups (EWG) selected from the group consisting of fluoro (-F), chloro (-Cl), bromo (-Br), iodo (-I), halogenalkyl, trihalomethyl, trifluoromethyl, trichloromethyl, tribromomethyl, nitro ($-NO_2$), cyano (-CN), carbonyl ($-(C{=}O)R^7$), ammonium ($-NH_3^+$), and substituted ammonium ($-N(R^8)_3^+$); |
| $R^2$ | is H, $C_1$-$C_{20}$-alkyl, $C_3$-$C_{20}$-cycloalkyl, $C_6$-$C_{20}$-aryl, $C_6$-$C_{20}$-aryl-$C_1$-$C_4$-alkyl, or $C_1$-$C_6$-(di)alkylaminocarbonyl; |
| $R^3$, $R^4$, $R^5$, and $R^6$ | are independently of each other selected from the group consisting of H and $C_1$-$C_4$-alkyl; |
| $R^7$ | is H, halogen, alkyl, aryl, hydroxy, alkoxy, aryloxy, carbonyloxy, or amino; and |
| $R^8$ | is H, alkyl, or aryl. |

The organic moieties mentioned in the above definitions of the variables are collective terms for individual listings of the individual group members. The prefix $C_n$-$C_m$ indicates in each case the possible number of carbon atoms in the group.
The phosphoric acid triamide compound according to the invention is 2-NPT.

The term "alkyl" as used herein denotes in each case a straight-chain or branched alkyl group having usually from 1 to 20 carbon atoms, preferably from 1 to 10 carbon atoms, frequently from 1 to 6 carbon atoms, more preferably 1 to 4 carbon atoms, e.g. 3 or 4 carbon atoms. Examples of alkyl groups are methyl, ethyl, n-propyl, iso-propyl, n-butyl, 2-butyl, iso-butyl, tert-butyl, n-pentyl, 1-methylbutyl, 2-methylbutyl, 3-methylbutyl, 2,2-dimethylpropyl, 1-ethylpropyl, n-hexyl, 1,1-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, and 1-ethyl-2-methylpropyl. Preferred alkyl groups are methyl, ethyl, n-propyl, isopropyl, n-butyl, isobutyl, sec-butyl, tert-butyl, n-pentyl, isopentyl, neopentyl, tert-pentyl, hexyl, 2-methylpentyl, n-heptyl, n-octyl, 2-ethylhexyl, isooctyl, nonyl, isononyl, decyl, and isodecyl.

The term "cycloalkyl" as used herein denotes in each case a monocyclic cycloaliphatic radical having usually from 3 to 20 carbon atoms, preferably from 3 to 10 carbon atoms, more preferably from 3 to 6 carbon atoms, such as cyclopropyl, cyclobutyl, cyclopentyl, cyclohexyl, cycloheptyl, cyclooctyl, cyclononyl and cyclodecyl or cyclopropyl, cyclobutyl, cyclopentyl and cyclohexyl.

The term "aryl" includes mono-, bi- or tricyclic aromatic radicals having usually from 6 to 14, preferably 6, 10, or 14 carbon atoms. Exemplary aryl groups include phenyl, naphthyl and anthracenyl. Phenyl is preferred as aryl group.

The term "arylalkyl" refers to aryl as defined above, which is bonded via a $C_1$-$C_4$-alkyl group, in particular a methyl group (= arylmethyl), to the remainder of the molecule, examples including benzyl, 1-phenylethyl, 2-phenylethyl, etc.

It is to be understood that, preferably, also stereoisomers, tautomers, N-oxides, and salts of the (thio)phosphoric acid triamides are covered by the term "(thio)phosphoric acid triamide". Stereoisomers are present, if the compounds contain one or more centers of chirality. In this case, the compounds will be present in the form of different enantiomers or diastereomers, if more than one center of chirality is present. The term "(thio)phosphoric acid triamide" preferably covers every possible stereoisomer, i.e. single enantiomers or diastereomers, as well as mixtures thereof. Tautomers include, e.g., keto-enol tautomers. N-oxides may be formed under oxidative conditions, if tertiary amino groups are present. Salts may be formed, e.g., with the basic amino groups of the (thio)phosphoric acid triamides. Anions, which stem from an acid, with which the (thio)phosphoric acid amide may have been reacted, are e.g. chloride, bromide, fluoride, hydrogensulfate, sulfate, dihydrogenphosphate, hydrogenphosphate, phosphate, nitrate, bicarbonate, carbonate, hexafluorosilicate, hexafluorophosphate, benzoate, and the anions of $C_1$-$C_4$-alkanoic acids, preferably formate, acetate, propionate and butyrate.

According to the invention, the phosphoric acid triamide (2) is N-(2-nitrophenyl)phosphoric triamide (2-NPT).

Furthermore, the present invention relates to the :

Use of a 2-NPT as urease inhibitor for treating a fertilizer mixture (3) comprising a urea-containing fertilizer (3a) and an additional P-containing fertilizer (3b) which is preferably a NPK fertilizer, a NP fertilizer, a PK fertilizer, or a P fertilizer.

A further preferred embodiment is the use as defined above, wherein the additional P-containing fertilizer (3b) is a NPK fertilizer selected from the group consisting of monoammonium phosphate (MAP), diammonium phosphate (DAP), calcium phosphate, super phosphate, double super phosphate, triple super phosphate (TSP), phosphate rock, ammonium polyphosphate (APP), and combinations thereof.

A further preferred embodiment is the use as defined above, wherein the additional P-containing fertilizer (3b) is diammonium phosphate (DAP).

The fertilizer mixture (3) as defined herein comprises a urea-containing fertilizer (3a) and an additional P-containing fertilizer (3b) which is preferably a NPK fertilizer, a NP fertilizer, a PK fertilizer, or a P fertilizer.

As used herein, the term "fertilizer" covers any chemical compound that improves the levels of available plant nutrients and/or the chemical and physical properties of soil, thereby directly or indirectly promoting plant growth, yield, and quality. Fertilizers are typically applied either through the soil (for uptake by plant roots) or by foliar feeding (for uptake through leaves). The term "fertilizer" can be subdivided into two major categories: a) organic fertilizers (composed of decayed plant/animal matter) and b) inorganic fertilizers (composed of chemicals and minerals). Organic fertilizers include manure, slurry, worm castings, peat, seaweed, sewage, and guano. Green manure crops are also regularly grown to add nutrients (especially nitrogen) to the soil. Manufactured organic fertilizers include compost, blood meal, bone meal and seaweed extracts. Further examples are enzymatically digested proteins, fish meal, and feather meal. The decomposing crop residue from prior years is another source of fertility. In addition, naturally occurring minerals such as mine rock phosphate, sulfate of potash and limestone are also considered inorganic fertilizers. Inorganic fertilizers are usually manufactured through chemical processes (such as the Haber-Bosch process), also using naturally occurring deposits, while chemically altering them (e.g. concentrated triple superphosphate). Naturally occurring inorganic fertilizers include Chilean sodium nitrate, mine rock phosphate, and limestone.

"Manure" is organic matter used as organic fertilizer in agriculture. Depending on its structure, manure can be divided into liquid manure, semi-liquid manure, stable or solid manure and straw manure. Depending on its origin, manure can be divided into manure derived from animals or plants. Common forms of animal manure include feces, urine, farm

slurry (liquid manure) or farmyard manure (FYM) whereas FYM also contains a certain amount of plant material (typically straw), which may have been used as bedding for animals. Animals from which manure can be used comprise horses, cattle, pigs, sheep, chickens, turkeys, rabbits, and guano from seabirds and bats. The application rates of animal manure when used as fertilizer highly depends on the origin (type of animals). Plant manures may derive from any kind of plant whereas the plant may also be grown explicitly for the purpose of plowing them in (e.g. leguminous plants), thus improving the structure and fertility of the soil. Furthermore, plant matter used as manure may include the contents of the rumens of slaughtered ruminants, spent hops (left over from brewing beer) or seaweed.

As used herein, a "urea-containing fertilizer (3a)" is defined as a fertilizer comprising at least one component selected from the group consisting of urea, urea ammonium nitrate (UAN), isobutylidene diurea (IBDU), crotonylidene diurea (CDU) and urea formaldehyde (UF), urea-acetaldehyde, and ureaglyoxal condensates.

In a preferred embodiment of the invention, the urea-containing fertilizer (3a) is urea.

In customary commercial fertilizer quality, the urea has a purity of at least 90%, and may for example be in crystalline, granulated, compacted, prilled or ground form.

As used herein, the "P-containing fertilizer (3b)" is any fertilizer providing any form of the chemical element phosphorus (P) or containing any chemical compounds incorporating the chemical element phosphorus (P), including but not limited to phosphate-containing fertilizers or fertilizers containing $P_2O_5$. Preferably, the P-containing fertilizer is selected from the group consisting of a NPK fertilizer, a NP fertilizer, a PK fertilizer, or a P fertilizer. Most preferably, the P-containing fertilizer is a NPK fertilizer. Of course, also combinations of these fertilizers may be used as additional P-containing fertilizer (3b).

P fertilizers, K fertilizers, and N fertilizers are straight fertilizers, i.e. fertilizers that contain only one of the nutritive elements P, K, and N. It is to be understood, however, that these fertilizers may additionally comprise at least one additional nutritive element selected from C, H, O, S, Ca, Mg, Fe, Mn, Cu, Zn, Mo, and B.

Preferred P fertilizers include basic slag (Thomas phosphate), superphosphate, triple superphosphate, partly digested phosphate rock, soft phosphate rock, dicalcium phosphate, thermal (fused) phosphate, aluminum phosphate, and combinations thereof.

NPK fertilizers, NP fertilizers, and PK fertilizers are multinutrient fertilizers, i.e. fertilizers that comprise combinations of the nutritive elements P, K, and N as indicated by the terms "NPK", "NP", and "PK". It is to be understood, however, that these fertilizers may additionally comprise at least one additional nutritive element selected from C, H, O, S, Ca, Mg, Fe, Mn, Cu, Zn, Mo, and B.

The NPK fertilizers, NP fertilizers, and PK fertilizers may be provided as complex fertilizers or bulk-blend or blended fertilizers. The term complex fertilizer refers to a compound fertilizer formed by mixing ingredients that react chemically. In bulk-blend or blended fertilizers, two or more granular fertilizers of similar size are mixed to form a compound fertilizer.

According to the EEC Guidelines, NPK fertilizers must contain at least 3 wt.-% N plus 5 wt.-% $P_2O_5$ plus 5 wt.-% $K_2O$ and at least 20 wt.-% total nutrients, based on the total weight of the NPK fertilizer. The most commonly used grades (N-$P_2O_5$-$K_2O$, each in wt %) are

- nutrient ratio 1 : 1 : 1:
  15-15-15, 16-16-16, 17-17-17
- nutrient ratios 1 : 2 : 3 and 1 : 1.5 : 2:
  5-10-15, 6-12-18, 10-15-20
- nutrient ratio 1 : 1 : 1.5 - 1.7:
  13-13-21, 14-14-20, 12-12-17
- nutrient ratios 3 : 1 : 1 and 2 : 1 : 1:
  24-8-8, 20-10-10
- low-phosphate grades:
  15-5-20, 15-9-15

The minimum analysis for NP fertilizers under the EEC Guidelines is 3 wt.-% N and 5 wt.-% $P_2O_5$ and at least 18 wt.-% total nutrients, based on the total weight of the NP fertilizer. Common grades are 20-20, 22-22, 26-14, 11-52, 16-48, and 18-46. These products are appropriate for potassium-rich soils or where potash is supplied as a separate fertilizer.

In the group of PK fertilizers, all combinations of the straight P and K fertilizers listed above are possible. In general, the materials are first milled and then mixed and granulated, so that a fairly homogeneous mixture is obtained. Some products are also made by bulk blending. The EEC Guidelines set forth a minimum analysis of 5 wt.-% $P_2O_5$, 5 wt.-% $K_2O$, and at least 18 wt.-% nutrients, based on the total weight of the PK fertilizer.

In a preferred embodiment, the urea-containing fertilizer (3a) is contained in an amount of at least 4 wt.-%, more preferably at least 8 wt.-%, most preferably at least 12 wt.-%, particularly preferably at least 16 wt.-%, particularly

more preferably at least 20 wt.-%, particularly even more preferably at least 24 wt.-%, particularly most preferably at least 28 wt.-%, for example preferably at least 32 wt.-%, for example more preferably at least 36 wt.-%, for example even more preferably at least 40 wt.-%, for example most preferably at least 44 wt.-%, for example at least 48 wt.-%, based on the total weight of the fertilizer mixture (3).

In a preferred embodiment, the urea-containing fertilizer (3a) is contained in an amount of at most 96 wt.-%, more preferably at most 92 wt.-%, most preferably at most 88 wt.-%, particularly preferably at most 84 wt.-%, particularly more preferably at most 80 wt.-%, particularly even more preferably at most 76 wt.-%, particularly most preferably at most 72 wt.-%, for example preferably at most 68 wt.-%, for example more preferably at most 64 wt.-%, for example even more preferably at most 60 wt.-%, for example most preferably at most 56 wt.-%, for example at most 52 wt.-%, based on the total weight of the fertilizer mixture (3).

In a preferred embodiment, the P-containing fertilizer (3b) is contained in an amount of at least 4 wt.-%, more preferably at least 8 wt.-%, most preferably at least 12 wt.-%, particularly preferably at least 16 wt.-%, particularly more preferably at least 20 wt.-%, particularly even more preferably at least 24 wt.-%, particularly most preferably at least 28 wt.-%, for example preferably at least 32 wt.-%, for example more preferably at least 36 wt.-%, for example even more preferably at least 40 wt.-%, for example most preferably at least 44 wt.-%, for example at least 48 wt.-%, based on the total weight of the fertilizer mixture (3).

In a preferred embodiment, the P-containing fertilizer (3b) is contained in an amount of at most 96 wt.-%, more preferably at most 92 wt.-%, most preferably at most 88 wt.-%, particularly preferably at most 84 wt.-%, particularly more preferably at most 80 wt.-%, particularly even more preferably at most 76 wt.-%, particularly most preferably at most 72 wt.-%, for example preferably at most 68 wt.-%, for example more preferably at most 64 wt.-%, for example even more preferably at most 60 wt.-%, for example most preferably at most 56 wt.-%, for example at most 52 wt.-%, based on the total weight of the fertilizer mixture (3).

In a preferred embodiment, within the fertilizer mixture (3), the weight ratio of urea-containing fertilizer (3a) to P-containing fertilizer (3b) is preferably at least 1:100, more preferably at least 1:60, most preferably at least 1:25, particularly preferably at least 1:10, particularly more preferably at least 1:7, particularly even more preferably at least 1:5, particularly most preferably at least 1:4, for example preferably at least 1:3, for example more preferably at least 1:2, for example even more preferably at least 1:1.75, for example most preferably at least 1:1.5, for example particularly preferably at least 1:1.25, for example at least 1:1.1.

In a preferred embodiment, within the fertilizer mixture (3), the weight ratio of urea-containing fertilizer (3a) to P-containing fertilizer (3b) is preferably at most 100:1, more preferably at most 60:1, most preferably at most 25:1, particularly preferably at most 10:1, particularly more preferably at most 7:1, particularly even more preferably at most 5:1, particularly most preferably at most 4:1, for example preferably at most 3:1, for example more preferably at most 2:1, for example even more preferably at most 1.75:1, for example most preferably at most 1.5:1, for example particularly preferably at most 1.25:1, for example at most 1.1:1.

It has been found that in particular phosphate-containing fertilizers such as P-containing fertilizer (3b) can cause stability problems of (thio)phosphoric acid triamides in general, particularly of other NXPT.

The additional P-containing fertilizer (3b) is therefore a phosphate-containing fertilizer, i.e. a fertilizer selected from the group consisting of a NPK fertilizer, a NP fertilizer, a PK fertilizer, and a P fertilizer as defined above.

In a preferred embodiment, the P-containing fertilizer (3b) is selected from the group consisting of monoammonium phosphate (MAP), diammonium phosphate (DAP), calcium phosphate, super phosphate, double super phosphate, triple super phosphate (TSP), phosphate rock, ammonium polyphosphate (APP), and combinations thereof.

In one particularly preferred embodiment, the P-containing fertilizer (3b) is monoammonium phosphate (MAP).

In one particularly preferred embodiment, the P-containing fertilizer (3b) is diammonium phosphate (DAP).

In one particularly preferred embodiment, the P-containing fertilizer (3b) is calcium phosphate.

In one particularly preferred embodiment, the P-containing fertilizer (3b) is super phosphate.

In one particularly preferred embodiment, the P-containing fertilizer (3b) is double super phosphate.

In one particularly preferred embodiment, the P-containing fertilizer (3b) is triple super phosphate (TSP).

In one particularly preferred embodiment, the P-containing fertilizer (3b) is phosphate rock.

In one particularly preferred embodiment, the P-containing fertilizer (3b) is ammonium polyphosphate (APP).

As used herein, the term "decomposition of the urease inhibitor" or "decomposition of the (thio)phosphoric triamide urease inhibitor" is to be understood as follows.

The additional P-containing fertilizer (3b) according to the invention typically causes a decomposition of the other NXPT of at least 1 wt.-%, preferably at least 3 wt.-%, more preferably at least 5 wt.-%, most preferably at least 7 wt.-%, particularly at least 10 wt.-%, particularly preferably at least 13 wt.%, particularly more preferably at least 16 wt.%, for example at least 19 wt.-% based on the total amount of the other NXPT within 15 days at a temperature of from 20 °C to 25 °C, if no phosphoric acid triamide (2) according to the invention is present, wherein the other NXPT is preferably NBPT.

If phosphoric acid triamide (2) is present, this decomposition which is typical for the other NXPT can be prevented.

Thus, the present invention focuses on the decomposition problems caused by the P-containing fertilizer (3b) only, and in this context the phosphoric acid triamide (2) may be beneficially used.

In one embodiment, the difference (delta) in decomposition of phosphoric acid triamide (2) in the mixture with fertilizer mixture (3) compared to the decomposition of other NXPT under the same conditions is at least 20 wt.-%, preferably at least 30 wt.-%, more preferably at least 40 wt.%, most preferably at least 50 wt.%, particularly at least 60 wt.-%, particularly preferably at least 70 wt.-%, particularly more preferably at least 80 wt.-%, for example at least 90 wt.-% based on the total amount of the urease inhibitor within 15 days at a temperature of 20 °C to 25 °C, wherein there is less decomposition of the phosphoric acid triamide (2) and the decomposition is caused by the influence of the P-containing fertilizer (3b).

In another embodiment, the difference (delta) in decomposition of phosphoric acid triamide (2) in the mixture with fertilizer mixture (3) compared to the decomposition of other NXPT under the same conditions is at least 20 wt.-%, preferably at least 30 wt.-%, more preferably at least 40 wt.%, most preferably at least 50 wt.%, particularly at least 60 wt.-%, particularly preferably at least 70 wt.-%, particularly more preferably at least 80 wt.-%, for example at least 90 wt.-% based on the total amount of the urease inhibitor within 1 month at a temperature of 20 °C to 25 °C, wherein there is less decomposition of the phosphoric acid triamide (2) and the decomposition is caused by the influence of the P-containing fertilizer (3b).

In another embodiment, the difference (delta) in decomposition of phosphoric acid triamide (2) in the mixture with fertilizer mixture (3) compared to the decomposition of other NXPT under the same conditions is at least 20 wt.-%, preferably at least 30 wt.-%, more preferably at least 40 wt.%, most preferably at least 50 wt.%, particularly at least 60 wt.-%, particularly preferably at least 70 wt.-%, particularly more preferably at least 80 wt.-%, for example at least 90 wt.-% based on the total amount of the urease inhibitor within 2 months at a temperature of 20 °C to 25 °C, wherein there is less decomposition of the phosphoric acid triamide (2) and the decomposition is caused by the influence of the P-containing fertilizer (3b).

The amount of the (thio)phosphoric acid triamide in a sample after a certain time period may be detected e.g. by HPLC using method DIN EN 16651 and/or DIN EN 16075. In order to exclude a destabilizing effect caused by the urea-containing fertilizer (3a), the phosphoric acid triamide (2) may be provided in combination with a stabilizing agent, which prevents decomposition caused by the fertilizer (3a). By comparing the decomposition of the phosphoric acid triamide (2) in the presence of the fertilizer (3a) only, with the decomposition of the phosphoric acid triamide (2) in the presence of the fertilizer mixture (3) comprising the fertilizer (3a) and the P-containing fertilizer (3b), the decomposition caused by the P-containing fertilizer (3b) can be determined. By comparing this result with the result in the case that the phosphoric acid triamide (2) is replaced by the same amount of other NXPT, for example NBPT, the extent to which the decomposition is reduced by using the phosphoric acid triamide (2) in combination with the P-containing fertilizer (3b) can be determined.

Alternatively, the amount of the phosphoric acid triamide (2) or of the other NXPT in a sample after a certain time period may be determined indirectly by determining the urease inhibiting efficacy that is observable. The urease-inhibiting efficacy may be determined by the Drager test as outlined in the Examples. The Drager test is based on the determination of the concentration of ammonia gas that is set free from a soil sample being treated with a urea-containing fertilizer once a day. In general, a certain amount of ammonia is typically produced within a certain time period in a soil sample being treated with a urea-containing fertilizer due to the degradation of the urea-containing fertilizer caused by the urease, which is present in the soil. If the urea-containing fertilizer is provided in combination with a urease inhibitor such as a phosphoric acid triamide (2), the degradation of the urea-containing fertilizer is slowed down, so that a lower amount of ammonia will be produced in the same time period. On the other hand, if the phosphoric acid triamide (2) has decomposed to a certain extent, e.g. upon storage, the production of ammonia will be reduced only to a lower extent. The ammonia concentration measured after a certain time period may thus be correlated with the amount of the phosphoric acid triamide (2) in a sample. In order to exclude a destabilizing effect caused by the urea-containing fertilizer (3a), the phosphoric acid triamide (2) may be provided in combination with a stabilizing agent, which prevents decomposition caused by the fertilizer (3a). By comparing the decomposition of the phosphoric acid triamide (2) in the presence of the fertilizer (3a) only, with the decomposition of the phosphoric acid triamide (2) in the presence of the fertilizer mixture (3) comprising the fertilizer (3a) and the P-containing fertilizer (3b), the decomposition caused by the P-containing fertilizer (3b) can be determined. By comparing this result with the result in the case that the phosphoric acid triamide (2) is replaced by the same amount of other NXPT, for example NBPT, the extent to which the decomposition is reduced by using the phosphoric acid triamide (2) in combination with the P-containing fertilizer (3b) can be determined.

As outlined above, the ammonia is produced in a soil sample being treated with the above mentioned compositions and can be measured according to the Drager test.

Depending on the soil sample, typical threshold values include 600 ppm, 500 ppm, 400 ppm or 300 ppm. These threshold values may be reached for example after a time of 5, 6, 7, 8, 9, 10, 11, 12, 13, 14 or 15 days, if the other NXPT is provided in a composition comprising the fertilizer (3a), but no P-containing fertilizer (3b), and no phosphoric acid triamide (2).

Furthermore, it is preferred in connection with the above embodiments that the phosphoric acid triamide (2) is in each case provided in combination with an amine (4) as defined in detail further below, in order to exclude a destabilizing effect caused by the urea-containing fertilizer (3a), as the amine (4) acts as a stabilizing agent, which prevents decomposition caused by the fertilizer (3a). It is noted, however, that the amine (4) typically does not prevent decomposition caused by the P-containing fertilizer (3b).

As described above, the present invention also discloses a granule G comprising a urea-containing fertilizer (3a) and a P-containing fertilizer (3b) which is preferably a NPK fertilizer, a NP fertilizer, a PK fertilizer, or a P fertilizer, wherein the granule is treated with a phosphoric acid triamide (2).

As used herein, the term "granule" generally refers to particles, which are preferably between two screen sizes usually within the range of 1 to 4 mm. The granules may have a spherical or near-spherical form made by solidification of free-falling droplets in air or other fluid medium (e.g. oil). Apart from the fertilizer, the granule may also comprise a substance to prevent caking or to control the dissolution rate or to improve the physical condition of the granule. The substance may be incorporated in the granule or applied as a layer surrounding the granule. It is to be understood that the fertilizer (3a) and the P-containing fertilizer (3b) may either be provided alone or together in granules. A skilled person is aware that granules may be manufactured through granulation of solids, slurries, or melts according to standard processes known in the art.

As used in the context of the granule G, "treated with a phosphoric acid triamide (2)" means that the granules are surface-treated with the phosphoric acid triamide (2). In this connection, surface-treatment preferably means that a liquid formulation of the phosphoric acid triamide (2) has been sprayed onto the granule, so that preferably a coating of the phosphoric acid triamide (2) surrounding the granule is formed.

The present invention also discloses a composition B, which comprises said phosphoric acid triamide (2), and a fertilizer mixture (3), and is inter alia defined by the process by which the composition is obtainable, wherein the seven process options consisting of the processes P1, P2, P3, P4, P5, P6 and P7 (as described above) are provided.

Unless otherwise indicated, the term "granule" is to be understood as defined above in connection with the granule G. Where indicated, the granules may in addition to the fertilizer (3a) and/or the P-containing fertilizer (3b) comprise the phosphoric acid triamide (2). In this case, unless otherwise indicated, the phosphoric acid triamide (2) may be incorporated in the granule or may be present as a layer surrounding the granule.

As used in the context of the processes by which the composition B is obtainable, "treating granules with the phosphoric acid triamide (2)" means that the granules are surface-treated with the a phosphoric acid triamide (2). In this connection, surface-treatment preferably means that a liquid formulation of the phosphoric acid triamide (2) is sprayed onto the granule, so that preferably a coating of the phosphoric acid triamide (2) surrounding the granule is formed.

In connection with the above mixture according to the invention and the above use according to the invention, it is generally preferred that the phosphoric acid triamide (2) is provided in combination with at least one amine (4). The amine (4) typically exhibits a stabilizing effect on the phosphoric acid triamide (2) in terms of a decomposition caused by the urea-containing fertilizer (3a).

Thus, liquid formulations of the phosphoric acid triamide (2) preferably comprise the phosphoric acid triamide (2) and an amine (4).

In general, the amine(s) (4) can be any amine, i.e. any chemical compound having at least one amino group, including (but not limited to)

- primary, secondary, and tertiary amines,
- linear, branched, and cyclic amines,
- aliphatic and aromatic amines,
- monomeric, oligomeric and polymeric amines,
- biogenic and non-biogenic amines.

In a preferred embodiment of the invention, the phosphoric acid triamide (2) is provided in combination with at least one amine (4) selected from the group consisting of

(4a) a polymeric polyamine; and

(4b) an amine containing not more than one amino group and at least three alkoxy or hydroxy-substituted $C_2$ to $C_{12}$ alkyl groups $R^{21}$, wherein at least one of the groups $R^{21}$ is different to the other groups $R^{21}$; and

(4c) an amine containing not more than one amino group and at least two alkoxy- or hydroxy-substituted $C_2$ to $C_{12}$ alkyl groups $R^{22}$, wherein at least one of the groups $R^{22}$ bears the alkoxy or hydroxy substituent at a secondary or tertiary carbon atom and wherein at least one of the groups $R^{22}$ is different to the other group(s) $R^{22}$; and

(4d) an amine containing at least one saturated or unsaturated $C_8$ to $C_{40}$ alkyl group $R^{23}$; and

(4e) a saturated or unsaturated heterocyclic amine which contains at least one oxygen atom as ring atom and which does not contain a further alkoxy group; and

(4f) an amine having a boiling point of more than 100 °C, preferably more than 150 °C, more preferably more than 200 °C at ambient pressure (1 bar), and

(4g) a primary amine, and

(4h) a secondary amine, and

(4i) a tertiary amine,

(4j) an amine containing not more than one amino group and at least two alkoxy- or hydroxy-substituted $C_2$ to $C_{12}$ alkyl groups $R^{22}$,

(4k) an amine containing not more than one amino group and at least three alkoxy- or hydroxy-substituted $C_2$ to $C_{12}$ alkyl groups $R^{22}$,

(41) an amine containing not more than one amino group and at least three alkoxy- or hydroxy-substituted $C_2$ to $C_{12}$ alkyl groups $R^{41}$, wherein all groups $R^{41}$ within said amine are identical, and

(4m) an amine containing not more than one amino group and at least two alkoxy- or hydroxy-substituted $C_2$ to $C_{12}$ alkyl groups $R^{42}$, wherein at least one of the groups $R^{42}$ bears the alkoxy or hydroxy substituent at a secondary or tertiary carbon atom and wherein all groups $R^{42}$ with said amine are identical, and

(4n) an amine selected from the group consisting of methyldiethanolamine, tetrahydroxypropylethylenediamine, trimethylaminoethylethanolamine, N,N,N',N'-tetramethyl-1,6-hexanediamine, N,N',N"-tris(dimethylaminopropyl)hexahydrotriazine, and 2,2'-dimorpholinyldiethyl ether, and

(4o) an amine selected from the group consisting of (L10), (L11), (L12), (L13), (L14), (L15), (L16), (L17), (L18), (L19), (L20), (L21), (L22), (L23), (L24) and (L29) as disclosed in WO 2016/103168.

According to one embodiment, the amine (4) is (4a) a polymeric polyamine.

Generally, (4a) can be any polymeric polyamine, and is preferably a polyalkyleneimine or polyvinylamine, more preferably a polyalkyleneimine, most preferably a polyethyleneimine, polypropyleneimine, or polybutyleneimine, particularly a polyethyleneimine.

According to one embodiment, (4a) is preferably any polymeric polyamine comprising ethyleneimine ($-CH_2CH_2NH-$) as monomeric units, including homopolymers and any copolymers of ethyleneimine, and is preferably a homopolymer of ethyleneimine. Copolymers can be alternating, periodic, statistical or block copolymers.

Generally, (4a) can be of any polymer structure, for example a linear polymer, a ring polymer, a cross-linked polymer, a branched polymer, a star polymer, a comb polymer, a brush polymer, a dendronized polymer, or a dendrimer etc. According to one embodiment, (4a) is an essentially linear polymer, and is preferably a linear polymer.

Polyethyleneimines which may be used are polyethyleneimine homopolymers which may be present in uncrosslinked or crosslinked form. The polyethyleneimine homopolymers can be prepared by known processes, as described, for example, in Römpps (Chemie Lexikon, 8th edition, 1992, pages 3532-3533), or in Ullmanns Enzyklopädie der Technischen Chemie, 4th edition, 1974, vol. 8, pages 212-213. and the literature stated there. They have a molecular weight in the range from about 200 to 1 000 000 g/mol. Corresponding commercial products are for example available under the name Lupasol® from BASF SE.

According to one embodiment of the invention, the polyethyleneimine (4a) is preferably a polyethylenimine having a degree of branching in the range of from 0.1 to 0.95 (also referred to as "highly branched polyethyleneimine"), and more preferably a polyethylenimine having a degree of branching in the range of from 0.25 to 0.90, more preferably a polyethylenimine having a degree of branching in the range of from 0.30 to 0.80, und most preferably a polyethylenimine having a degree of branching in the range of 0.50 to 0.80.

Highly branched polyethyleneimines are characterized by its high degree of branching, which can be determined for example via $^{13}C$-NMR spectroscopy, preferably in $D_2O$, and is defined as follows:

$$\text{Degree of branching} = D + T/D + T + L$$

D (dendritic) equals the percentage of tertiary amino groups, L (linear) equals the percentage of secondary amino groups, and T (terminal) equals the percentage of primary amino groups.

Generally, the polymeric polyamine (4a) can have different weight average molecular weights. The weight average molecular weight of (4a) is preferably at least 200, more preferably at least 400, most preferably at least 550, particularly at least 650, for example at least 750. The weight average molecular weight of (4a) is preferably not more than 10,000, more preferably not more than 4,000, most preferably not more than 1,900, particularly not more than 1,500, for example not more than 1,350. The weight average molecular weight can be determined by standard gel permeation chromatography (GPC) known to the person skilled in the art.

In one embodiment, the amine (4) is a polyethyleneimine, preferably a polyethyleneimine as defined above.

A skilled person knows suitable amounts of the phosphoric acid triamide (2) and optionally the amine (4) based on the fertilizer (3a).

In a preferred embodiment, the phosphoric acid triamide (2) is used in an amount of at least 0.00001 wt.-%, more preferably at least 0.00005 wt.-%, most preferably at least 0.0002 wt.-%, particularly preferably at least 0.001 wt.-%, particularly more preferably at least 0.005 wt.-%, particularly even more preferably at least 0.01 wt.-%, particularly most preferably at least 0.02 wt.-%, for example preferably at least 0.03 wt.-%, for example more preferably at least 0.04 wt.-%, for example even more preferably at least 0.05 wt.-%, for example most preferably at least 0.07 wt.-%, for example at least 0.1 wt.-%, based on the total weight of the fertilizer (3a).

In a preferred embodiment, the phosphoric acid triamide (2) is used in an amount of at most 35 wt.-%, more preferably at most 30 wt.-%, most preferably at most 25 wt.-%, particularly preferably at most 20 wt.-%, particularly more preferably at most 15 wt.-%, particularly even more preferably at most 10 wt.-%, particularly most preferably at most 7 wt.-%, for example preferably at most 3 wt.-%, for example more preferably at most 1 wt.-%, for example even more preferably at most 0.5 wt.-%, for example most preferably at most 0.15 wt.-%, for example at most 0.08 wt.-%, based on the total weight of the fertilizer (3a).

In another preferred embodiment, the amine (4) is used in an amount of at least 0.005 wt.-%, preferably at least 0.02 wt.-%, more preferably at least 0.1 wt.-%, most preferably at least 0.5 wt.-%, particularly at least 1 wt.-%, based on the total weight of the fertilizer (3a).

In another preferred embodiment, the amine (4) is used in an amount of at most 20 wt.-%, preferably at most 15 wt.-%, more preferably at most 10 wt.-%, most preferably at most 5 wt.-%, particularly at least 2 wt.-%, based on the total weight of the fertilizer (3a).

In connection with the mixture according to this invention and the use according to this invention, the following combinations of embodiments D-17 to D-24 are particularly preferred according to the present invention.

Preferred combinations of phosphoric acid triamide 2-NPT (2) and the fertilizers (3a) and (3b) are defined in the following Table 1. Compositions D-17 to D-24 are according to the invention. The remaining compositions are not within the scope of the invention.

Table 1

| (1) + (3a)/(3b) | (2) | (3a) | (3b) |
|---|---|---|---|
| D-1 | NAPT | U | MAP |
| D-2 | NAPT | U | DAP |
| D-3 | NAPT | U | CP |
| D-4 | NAPT | U | SP |
| D-5 | NAPT | U | DSP |
| D-6 | NAPT | U | TSP |
| D-7 | NAPT | U | PR |
| D-8 | NAPT | U | APP |
| D-9 | NATT | U | MAP |
| D-10 | NATT | U | DAP |
| D-11 | NATT | U | CP |
| D-12 | NATT | U | SP |
| D-13 | NATT | U | DSP |

| (1) + (3a)/(3b) | (2) | (3a) | (3b) |
|---|---|---|---|
| D-14 | NATT | U | TSP |
| D-15 | NATT | U | PR |
| D-16 | NATT | U | APP |
| D-17 | 2-NPT | U | MAP |
| D-18 | 2-NPT | U | DAP |
| D-19 | 2-NPT | U | CP |
| D-20 | 2-NPT | U | SP |
| D-21 | 2-NPT | U | DSP |
| D-22 | 2-NPT | U | TSP |
| D-23 | 2-NPT | U | PR |
| D-24 | 2-NPT | U | APP |
| D-25 | 3-NPT | U | MAP |
| D-26 | 3-NPT | U | DAP |

| (1) + (3a)/(3b) | (2) | (3a) | (3b) |
|---|---|---|---|
| D-27 | 3-NPT | U | CP |
| D-28 | 3-NPT | U | SP |
| D-29 | 3-NPT | U | DSP |
| D-30 | 3-NPT | U | TSP |
| D-31 | 3-NPT | U | PR |
| D-32 | 3-NPT | U | APP |
| D-33 | 4-NPT | U | MAP |
| D-34 | 4-NPT | U | DAP |
| D-35 | 4-NPT | U | CP |
| D-36 | 4-NPT | U | SP |
| D-37 | 4-NPT | U | DSP |
| D-38 | 4-NPT | U | TSP |
| D-39 | 4-NPT | U | PR |
| D-40 | 4-NPT | U | APP |
| D-41 | MNPT | U | MAP |
| D-42 | MNPT | U | DAP |
| D-43 | MNPT | U | CP |
| D-44 | MNPT | U | SP |
| D-45 | MNPT | U | DSP |
| D-46 | MNPT | U | TSP |
| D-47 | MNPT | U | PR |
| D-48 | MNPT | U | APP |
| D-49 | 2-NTPT | U | MAP |
| D-50 | 2-NTPT | U | DAP |
| D-51 | 2-NTPT | U | CP |
| D-52 | 2-NTPT | U | SP |
| D-53 | 2-NTPT | U | DSP |
| D-54 | 2-NTPT | U | TSP |
| D-55 | 2-NTPT | U | PR |
| D-56 | 2-NTPT | U | APP |
| D-57 | 3-NTPT | U | MAP |
| D-58 | 3-NTPT | U | DAP |
| D-59 | 3-NTPT | U | CP |
| D-60 | 3-NTPT | U | SP |
| D-61 | 3-NTPT | U | DSP |

| (1) + (3a)/(3b) | (2) | (3a) | (3b) |
|---|---|---|---|
| D-62 | 3-NTPT | U | TSP |
| D-63 | 3-NTPT | U | PR |
| D-64 | 3-NTPT | U | APP |
| D-65 | 4-NTPT | U | MAP |
| D-66 | 4-NTPT | U | DAP |
| D-67 | 4-NTPT | U | CP |
| D-68 | 4-NTPT | U | SP |
| D-69 | 4-NTPT | U | DSP |
| D-70 | 4-NTPT | U | TSP |
| D-71 | 4-NTPT | U | PR |
| D-72 | 4-NTPT | U | APP |
| D-73 | MNTT | U | MAP |
| D-74 | MNTT | U | DAP |
| D-75 | MNTT | U | CP |
| D-76 | MNTT | U | SP |
| D-77 | MNTT | U | DSP |
| D-78 | MNTT | U | TSP |
| D-79 | MNTT | U | PR |
| D-80 | MNTT | U | APP |
| D-81 | NPT | U | MAP |
| D-82 | NPT | U | DAP |
| D-83 | NPT | U | CP |
| D-84 | NPT | U | SP |
| D-85 | NPT | U | DSP |
| D-86 | NPT | U | TSP |
| D-87 | NPT | U | PR |
| D-88 | NPT | U | APP |
| D-89 | NTPT | U | MAP |
| D-90 | NTPT | U | DAP |
| D-91 | NTPT | U | CP |
| D-92 | NTPT | U | SP |
| D-93 | NTPT | U | DSP |
| D-94 | NTPT | U | TSP |
| D-95 | NTPT | U | PR |
| D-96 | NTPT | U | APP |

U = urea
MAP = monoammonium phosphate
DAP = diammonium phosphate
CP = calcium phosphate

SP = super phosphate

DSP = double super phosphate
PR = phosphate rock
TSP = triple super phosphate
APP = ammonium polyphosphate
NATT = N-(nitroaryl)thiophosphoric triamide,
NAPT = N-(nitroaryl)phosphoric triamide,
NTPT = N-(nitrophenyl)thiophosphoric triamide,
NPT = N-(nitrophenyl)phosphoric triamide,
2-NTPT = N-(2-nitrophenyl)thiophosphoric triamide,
2-NPT = N-(2-nitrophenyl)phosphoric triamide,
3-NTPT = N-(3-nitrophenyl)thiophosphoric triamide,
3-NPT = N-(3-nitrophenyl)phosphoric triamide,
4-NTPT = N-(4-nitrophenyl)thiophosphoric triamide,
4-NPT = N-(4-nitrophenyl)phosphoric triamide,
MNTT = N-(4-Methyl-2-nitrophenyl)thiophosphoric triamide,
MNPT = N-(4-Methyl-2-nitrophenyl)phosphoric triamide.

It is to be understood that in each case of the preferred embodiments listed above, the phosphoric acid triamide (2) may preferably be provided in combination with an amine (4) as defined above.

It is to be understood that the mixture according to the invention and the granule G may further comprise auxiliaries such as solvents, solid carriers, surfactants, adjuvants, thickeners, bactericides, anti-freezing agents, anti-foaming agents, colorants, tackifiers, binders, preservatives, antioxidants, and odorants.

Suitable auxiliaries are solvents, liquid carriers, solid carriers or fillers, surfactants, dispersants, emulsifiers, wetters, adjuvants, solubilizers, penetration enhancers, protective colloids, adhesion agents, thickeners, humectants, compatibilizers, bactericides, anti-freezing agents, anti-foaming agents, colorants, tackifiers and binders.

Suitable solvents and liquid carriers are water and organic solvents, such as mineral oil fractions of medium to high boiling point, e.g. kerosene, diesel oil; oils of vegetable or animal origin; aliphatic, cyclic and aromatic hydrocarbons, e. g. toluene, paraffin, tetrahydronaphthalene, alkylated naphthalenes; alcohols, e.g. ethanol, propanol, butanol, cyclohexanol; glycols; DMSO; ketones, e.g. cyclohexanone; esters, e.g. lactates, carbonates, fatty acid esters, gammabutyrolactone; fatty acids; phosphonates; amines; amides, e.g. N-methylpyrrolidone, fatty acid dimethylamides; and mixtures thereof.

Suitable solid carriers or fillers are mineral earths, e.g. silicates, silica gels, talc, kaolins, limestone, lime, chalk, clays, dolomite, diatomaceous earth, bentonite, calcium sulfate, magnesium sulfate, magnesium oxide; polysaccharides, e.g. cellulose, starch; fertilizers, e.g. ammonium sulfate, ammonium phosphate, ammonium nitrate, ureas; products of vegetable origin, e.g. cereal meal, tree bark meal, wood meal, nutshell meal, and mixtures thereof.

Suitable surfactants are surface-active compounds, such as anionic, cationic, nonionic and amphoteric surfactants, block polymers, polyelectrolytes, and mixtures thereof. Such surfactants can be used as emulsifier, dispersant, solubilizer, wetter, penetration enhancer, protective colloid, or adjuvant. Examples of surfactants are listed in McCutcheon's, Vol. 1: Emulsifiers & Detergents, McCutcheon's Directories, Glen Rock, USA, 2008 (International Ed. or North American Ed.).

Suitable anionic surfactants are alkali, alkaline earth or ammonium salts of sulfonates, sulfates, phosphates, carboxylates, and mixtures thereof. Examples of sulfonates are alkylarylsulfonates, diphenylsulfonates, alpha-olefin sulfonates, lignine sulfonates, sulfonates of fatty acids and oils, sulfonates of ethoxylated alkylphenols, sulfonates of alkoxylated arylphenols, sulfonates of condensed naphthalenes, sulfonates of dodecyl- and tridecylbenzenes, sulfonates of naphthalenes and alkylnaphthalenes, sulfosuccinates or sulfosuccinamates. Examples of sulfates are sulfates of fatty acids and oils, of ethoxylated alkyl phenols, of alcohols, of ethoxylated alcohols, or of fatty acid esters. Examples of phosphates are phosphate esters. Examples of carboxylates are alkyl carboxylates, and carboxylated alcohol or alkylphenol ethoxylates.

Suitable non-ionic surfactants are alkoxylates, N-substituted fatty acid amides, amine oxides, esters, sugar-based surfactants, polymeric surfactants, and mixtures thereof. Examples of alkoxylates are compounds such as alcohols, alkylphenols, amines, amides, aryl phenols, fatty acids or fatty acid esters which have been alkoxylated with 1 to 50 equivalents. Ethylene oxide and/or propylene oxide may be employed for the alkoxylation, preferably ethylene oxide.

Examples of N-substituted fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, sucrose and glucose esters or alkylpolyglucosides. Examples of polymeric surfactants are home- or copolymers of vinylpyrrolidone, vinylalcohols, or vinylacetate.

Suitable cationic surfactants are quaternary surfactants, for example quaternary ammonium compounds with one or two hydrophobic groups, or salts of long-chain primary amines. Suitable amphoteric surfactants are alkylbetains and imidazolines. Suitable block polymers are block polymers of the A-B or A-B-A type comprising blocks of polyethylene oxide and polypropylene oxide or of the A-B-C type comprising alkanol, polyethylene oxide and polypropylene oxide. Suitable polyelectrolytes are polyacids or polybases. Examples of polyacids are alkali salts of polyacrylic acid or polyacid comb polymers. Examples of polybases are polyvinylamines or polyethyleneamines.

Suitable adjuvants are compounds, which have a neglectable or even no pesticidal activity themselves. Examples are surfactants, mineral or vegetable oils, and other auxiliaries. Further examples are listed by Knowles, Adjuvants and additives, Agrow Reports OS256, T&F Informa UK, 2006, chapter 5.

Suitable thickeners are polysaccharides (e.g. xanthan gum, carboxymethylcellulose), anorganic clays (organically modified or unmodified), polycarboxylates, and silicates.

Suitable bactericides are bronopol and isothiazolinone derivatives such as alkylisothiazolinones and benzisothiazolinones.

Suitable anti-freezing agents are ethylene glycol, propylene glycol, urea and glycerin.

Suitable anti-foaming agents are silicones, long chain alcohols, and salts of fatty acids.

Suitable colorants (e.g. in red, blue, or green) are pigments of low water solubility and watersoluble dyes. Examples are

- inorganic colorants, such as iron oxide, titan oxide, iron hexacyanoferrate,
- metal-complex dyes such as chromium-complex dyes, for example Orasol Yellow 141,
- organic colorants such as alizarin-, azo- and phthalocyanine colorants.

Preferred colorants are metal-complex dyes, more preferably chromium-complex dyes

Suitable tackifiers or binders are polyvinylpyrrolidones, polyvinylacetates, polyvinyl alcohols, polyacrylates, biological or synthetic waxes, and cellulose ethers.

Suitable preservatives include e.g. sodium benzoate, benzoic acid, sorbic acid, and derivatives thereof.

Suitable antioxidants include sulfites, ascorbic acid, tocopherol, tocopherol acetate, tocotrienol, melatonin, carotene, beta-carotene, ubiquinol, and derivatives thereof. Tocophercol acetate is preferred as antioxidant.

Suitable odorants include perfume materials which are for example mentioned in US 7 182 537, including allo-ocimene, Allyl cyclohexanepropionate, Allyl heptanoate, trans-Anethole, benzylbutyrate, Camphene, Cadinene, Carvacrol, cis-3-Hexenyl tiglate, Citronellol, Citronellyl acetate, Citronellyl nitrile, Citronellyl propionate, Cyclohexylethyl acetate, Decyl Aldehyde (Capraldehyde), Dihydromyrcenol, Dihydromyrcenyl acetate, 3,7-Dimethyl-1-octanol, Diphenyloxide, Fenchyl Acetate (1,3,3-Trimethyl-2-norbornanyl acetate), Geranyl acetate, Geranyl formate, Geranyl nitrile, cis-3-Hexenyl isobutyrate, Hexyl Neopentanoate, Hexyl tiglate, alphalonone, Ethyl Vanillin L80, Isoeugenol, Methyl cinnamate, Methyl dihydrojasmonate, Methyl beta-naphthyl ketone, Phenoxy ethyl isobutyrate, Vanillin L28, Isobornyl acetate, Isobutyl benzoate, Isononyl acetate, Isononyl alcohol (3,5,5- Trimethyl-1-hexanol), Isopulegyl acetate, Lauraldehyde, d-Limonene, Linalyl acetate, (-)-L-Menthyl acetate, Methyl Chavicol (Estragole), Methyl n-nonyl acetaldehyde, methyl octyl acetaldehyde, beta-Myrcene, Neryl acetate, Nonyl acetate, Nonaldehyde, p-Cymene, alpha-Pinene, beta-Pinene, alpha-Terpinene, gamma-Terpinene, alpha-Terpinyl acetate, Tetrahydrolinalool, Tetrahydromyrcenol, 2-Undecenal, Verdox (o-t-Butylcyclohexyl acetate), Vertenex (4-tert,Butylcyclohexyl acetate). Citronellyl nitrile is preferred as odorant.

The present invention is further illustrated by the following examples.

Examples

Materials:

Urease inhibitor 1: "NYPT", which is a mixture containing approx. 25 wt.-% N-n-propylthiophosphoric acid triamide (NPPT) and approx. 75 wt.-% N-n-butylthiophosphoric acid triamide (NBPT), based on the total amount of the two thiophosphoric triamides NPPT and NBPT, was obtained from BASF SE.
Urease inhibitor 2: N-(diaminophosphoryl)-2-nitroaniline (2-NPT), obtained from Enamine LTD, was dissolved in N-Methylpyrrolidon to obtain a 9 wt% solution.
Urea (Piagran 46) was obtained from SKW Piesteritz.
Diammonium phosphate (DAP)

General experimental details:

For the preparation of urea treated with a urease inhibitor, 3 kg of urea fertilizer granules were added to an ERWEKA mixer (dimensions mix drum: 50 cm diameter, 20 cm high). The mixer was turned on (27 RPM) and the urease inhibitor formulation was sprayed on the urea using a syringe. Afterwards, the fertilizer/urease inhibitor mixture was mixed for 3 minutes

For the preparation of the fertilizer mixtures, 10 g of urea treated with a urease inhibitor and 10 g of DAP are added to a small jar. After closing the jar, the fertilizers are mixed by vigorously shaking the jar. The closed jar is then stored at room temperature in a dark place. At the end of the storage time, urea granules are removed and tested using HPLC (DIN EN 16651 and DIN EN 16075).

Example 1:

Urea treated with a urease inhibitor was mixed with different phosphate fertilizers in a 1:1 wt.-% ratio. These mixtures were stored in closed containers at room temperature for 1 and 2 months. Afterwards, the urea granules were separated out and tested using HPLC. The following samples were tested:

| | |
|---|---|
| Sample 1: | Urea treated with 0.053 wt.-% NYPT active ingredient |
| Sample 2: | Urea treated with 0.048 wt.-% 2-NPT |
| Sample 3: | Urea treated with 0.053 wt.-% NYPT active ingredient, then mixed with DAP in a 50:50 wt.-% ratio |
| Sample 4: | Urea treated with 0.048 wt.-% 2-NPT, then mixed with DAP in a 50:50 wt.-% ratio |
| Sample 4 is according to the invention. Samples 1-3 are outside the scope of the invention. | |

As can be seen in Table 1, after 2 months storage of urea coated with different urease inhibitors, control samples 1 and 2 do not show significant degradation. The same coated urea samples were mixed with DAP and stored for 2 months. Sample 3 shows complete degradation of the active ingredient already after 1 month of storage. In sample 4, surprisingly, still 66 wt.-% active ingredient remains after 1 month and 38 wt.-% active ingredient is still present after 2 months of storage.

Table 1: Active ingredient concentration on urea after storage

| | wt% a.i. on urea | | |
|---|---|---|---|
| | 0 months storage | 1 month storage | 2 months storage |
| Sample 1 | 0.053 | 0.053 | 0.051 |
| Sample 2 | 0.048 | 0.048 | 0.048 |
| Sample 3 | 0.053 | 0.000 | 0.000 |
| Sample 4 | 0.048 | 0.032 | 0.018 |

## Claims

1. The use of N-(2-nitrophenyl)phosphoric triamide (2-NPT) for treating a fertilizer mixture (3) comprising a urea-containing fertilizer (3a) and an additional P-containing fertilizer (3b).

2. The use according to claim 1, wherein the additional P-containing fertilizer (3b) is a NPK fertilizer selected from the group consisting of monoammonium phosphate (MAP), diammonium phosphate (DAP), calcium phosphate, super phosphate, double super phosphate, triple super phosphate (TSP), phosphate rock, ammonium polyphosphate (APP), and combinations thereof.

## Patentansprüche

1. Verwendung von N-(2-Nitrophenyl)phosphorsäure-triamid (2-NPT) zum Behandeln einer Düngemittelmischung (3), die ein harnstoffhaltiges Düngemittel (3a) und ein zusätzliches P-haltiges Düngemittel (3b) umfasst.

**2.** Verwendung nach Anspruch 1, wobei es sich bei dem zusätzlichen P-haltigen Düngemittel (3b) um ein NPK-Düngemittel aus der Gruppe bestehend aus Monoammoniumphosphat (MAP), Diammoniumphosphat (DAP), Calciumphosphat, Superphosphat, Doppelsuperphosphat, Tripelsuperphosphat (TSP), Phosphatgestein, Ammoniumpolyphosphat (APP) und Kombinationen davon handelt.

**Revendications**

**1.** Utilisation de triamide N-(2-nitrophényl)phosphorique (2-NPT) pour le traitement d'un mélange fertilisant (3) comprenant un engrais (3a) contenant de l'urée et un engrais (3b) contenant du P supplémentaire.

**2.** Utilisation selon la revendication 1, l'engrais (3b) contenant du P supplémentaire étant un engrais NPK choisi dans le groupe constitué par le phosphate de monoammonium (MAP), le phosphate de diammonium (DAP), le phosphate de calcium, le superphosphate, le superphosphate double, le superphosphate triple (TSP), de la roche phosphatée, le polyphosphate d'ammonium (APP), et des combinaisons correspondantes.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2006010389 A
- US 4242325 A
- US 5352265 A
- US 2010218575 A1
- WO 2015062667 A
- WO 2016103168 A
- EP 0119494 A1
- WO 2013071344 A1
- DE 102009034433 A1
- WO 2015081349 A2


### Non-patent literature cited in the description


- **KISS, S. ; SIMIHAIAN, M.** Improving Efficiency of Urea Fertilizers by Inhibition of Soil Urease Activity. Kluwer Academic Publishers, 2002
- **RÖMPPS.** Chemie Lexikon. 1992, 3532-3533
- Ullmanns Enzyklopädie der Technischen Chemie. 1974, vol. 8, 212-213
- Emulsifiers & Detergents. McCutcheon's. McCutcheon's Directories, 2008, vol. 1
- Adjuvants and additives. **KNOWLES.** Agrow Reports OS256. T&F Informa, 2006